# EUROPEAN PATENT APPLICATION

(11) **EP 1 959 170 A1**
(43) Date of publication of application: **20.08.2008**
(21) Application number: 06833244.4
(22) Date of filing: 24.11.2006
(51) Int. Cl.: F16H 61/28, F16H 59/10

(54) **AUTOMATIC TRANSMISSION SELECT ASSIST DEVICE**

(30) Priority: 30.11.2005 JP 2005344819
(71) Applicant: Calsonic Kansei Corporation, Tokyo 164-8602 (JP)
(72) Inventor: KOBAYASHI, Shinya, Nakano-ku, Tokyo, 164-8602 (JP); HIROTA, Yukitsugu, Nakano-ku, Tokyo, 164-8602 (JP); NAGANO, Masaharu, Nakano-ku, Tokyo, 164-8602 (JP); OSAMURA, Kensuke, Nakano-ku, Tokyo, 164-8602 (JP)
(74) Representative: Oxley, Robin John George
(86) International application number: PCT/JP2006/323440
(87) International publication number: WO 2007/063773

(57) **Abstract**

A control unit 3 of a select assist device includes a start halt judging part 31 for judging a start halt by comparing a relative displacement amount and a start threshold value, a target relative displacement amount part 32 for setting a target relative displacement amount so that it is set to be a predetermined value when an assist actuator starts and then it is gradually decreased toward zero, and a drive command value computing part 33 for computing a drive command value so that approximate the relative displacement amount to the target relative displacement amount.

## Description

### [TECHNICAL FIELD]

The present invention belongs to a technical field of a select assist device for an automatic transmission which shifts its select position under an assist control according to a driver's operation of a select lever in a motor vehicle with the automatic transmission.

### [BACKGROUND OF THE INVENTION]

In a conventional select assist device of an automatic transmission is disclosed in Japanese Unexamined Patent Application Publication No. 09 - 323559, and it has a select lever is mechanically connected with a manual valve of the automatic transmission through an operating force transmitting means, such as a rod and a cable. An operating force of a driver, which is inputted to the select lever, is mechanically transmitted to the manual valve to shift its select positions according to its operating amount.

On the other hand, Japanese Unexamined Patent Application Publication No. 2003 - 97694 discloses, what is called, a shift by wire technology, which electrically drives a manual valve according to a select lever. In this technology, in order to move the manual valve, there is provided an actuator, which is driven to shift the select position by an electric signal to which a swing operation of the select lever is converted.

### [DISCLOSURE OF THE INVENTION]

### [PROBLEM(S) TO BE SOLVED BY THE INVENTION]

A large operating force is needed in order to operate the select lever, because the select operation produces mechanical reaction forces of the select operation, such as friction force of the operation force transmitting means and resistance force of a detent mechanism. Accordingly, in order to decrease the operation force necessary for the driver, the select lever needs to be set so have a length that is capable of obtaining a sufficient leverage force.

As a result, in the former conventional technology, the configuration of the select lever becomes to be larger due to the length thereof, which restricts its installation place, thereby causing a problem in that a design freedom of a layout in a passenger room becomes lower.

On the other hand, in the latter conventional technology, the length of the select lever can be designed to be shorter due to adaptation of the actuator, which can provide a design freedom of its layout which is higher compared to the former one. However, in the latter one, since the select lever and the manual valve is not mechanically connected with each other, and consequently its select positions becomes impossible to be shifted when its electric/electronic component system fails.

The present invention is made in order to solve the problem, and its object is to provide a select assist device of an automatic transmission which can make it possible to shift select positions, in a case of fail of an electric/electronic component system, by using a mechanical connection between a select lever and a select position shifting device, extending a design freedom of a layout due to downsizing of the select lever, and being capable of obtaining a select lever operational characteristic on demand.

### [MEANS FOR SOLVING THE PROBLEMS]

In order to achieve the above-described object, in a select assist device for an automatic transmission, of the present invention, in which a select lever and a select position shift device of an automatic transmission are connected with each other by a select force transmitting system that is provided with an assist actuator controlled by an assist control means to assist a select operating force of a driver, the select assist device is characterized in that the assist control means has an assist suppressing means for suppressing a sudden assist which is produced immediately after the assist actuator is started.

### [EFFECT OF THE INVENTION]

In the present invention, keeping the mechanical connection between the select lever and the select position shifting device, the actuator is controlled to drive to apply an assist force according to the driver's operation of the select lever so as to shift the select position shifting device of the automatic transmission. Therefore, shifting operation of the select positions can be ensured in a fail of an electric/electronic component system. In addition, the design freedom of the layout of the interior of a passenger room can be extended because of downsizing of the select lever.

### [BRIEF DESCRIPTION OF THE DRAWINGS]

FIG 1 is a side view showing a construction of an automatic transmission provided with a select assist device of a first embodiment according to the present invention;
FIG. 2 is a perspective view showing a main part of a detailed construction of an actuator and a select lever which are used in the select assist device of the first embodiment;
FIG. 3 is a perspective view showing a construction of a detent mechanism provided on the automatic transmission;
FIG. 4 is a control block diagram of a control unit and its peripheral devices which are used for the select assist device of the automatic transmission of the first embodiment;
FIG. 5 is a flow chart showing a basic flow of a select position shift control process which is executed by the control unit shown in FIG 4;
FIG 6 is a characteristic diagram showing a relationship between an operational reaction force acting on the select lever and a stroke angle in a select operation in a direction from a P position to an R position;
FIG 7 is a characteristic diagram showing a relationship between an operation angle (a stroke angle) of the select lever and an actuation angle of the actuator, and a relationship between the operation angle and a relative position relative to a midpoint, in a select operation in a direction from a P position to an R position;
FIGS. 8A to 8D is views showing relationships between the operation of the select lever and the actuation of the actuator, where FIG 8A is a view explaining a state where the select lever is located at a certain select position when it is not operated, FIG 8B is a view explaining a state where the assist control is executed according to the select operation, FIG 8C is a view explaining a state where the select operation is finished and the select lever is located at a desired select position, and FIG 8D is a view explaining a state where the select lever is rapidly operated;
FIG. 9 is a block diagram showing a detailed construction of a target relative displacement amount part of the control unit shown in FIG 4;
FIG. 10 is a flow chart showing a flow of an assist control process executed by the control unit of the select assist device of the automatic transmission of the first embodiment;
FIG. 11 is a diagram explaining a temporal change in the operation angle and an actuation angle and a temporal change in a target relative angle and an actual relative angle, when the actuator starts due to the select operation, in the select assist device of the automatic transmission of the first embodiment;
FIG. 12 is a diagram explaining a temporal change in the operation angle and an actuation angle and a temporal change in a target relative angle and an actual relative angle, when a target relative displacement amount is set to be zero, in the select assist device of the automatic transmission of the first embodiment;
FIG 13 is a time chart of test results showing temporal changes of the operating position, the actuating, the relative displacement amount and an angular rate of the motor in a case where the target relative displacement amount is set to be zero, in the select assist device of the automatic transmission of the first embodiment;
FIG. 14 is a time chart of test results showing temporal changes of the operating position, the actuating, the relative displacement amount and the angular rate of the motor, in the select assist device of the automatic transmission of the first embodiment;
FIG 15 is a block diagram showing a control unit and its peripheral devices which are used for a select.assist device of an automatic transmission of a second embodiment;
FIG 16 is a block diagram showing a detailed construction of a target actuating setting part of the control unit of the select assist device of the second embodiment;
FIG 17 is a flow chart showing a flow of an assist control process executed by the control unit of the select assist device of the second embodiment;
FIG 18 is a diagram explaining temporal changes of an operation angle, an actuation angle, a target actuation angle and an actual relative angle, in an select operation of the select assist device of the second embodiment;
FIG 19 is a block diagram showing a control unit and its peripheral devices which are used for a select assist device of an automatic transmission of a third embodiment;
FIG 20 is a block diagram showing a detailed construction of a rate limiter part used in the control unit of the select assist device of the automatic transmission of the third embodiment;
FIG 21 is a flow chart showing a flow of an assist control process executed by the control unit of the select assist device of the automatic transmission of the third embodiment;
FIG. 22 is a time chart showing rest results of temporal changes of positions (absolute angles), a displacement amount (a relative angle), the angular rate of the motor and a drive command value, in a case where the rate limiter part is not provided, in a select assist device of an automatic transmission;
FIG. 23 is a time chart showing rest results of temporal changes of the positions (the absolute angles), the displacement amount (a relative angle), the angular rate of the motor and the drive command value, in a case where the rate limiter part is provided, in the select assist device of the automatic transmission of the third embodiment;
FIG. 24 is a view showing another example of a select assist device of an automatic transmission of the embodiments of the present invention;
FIG 25 is a view showing other example of a select assist device of an automatic transmission of the embodiments of the present invention; and
FIG 26 is a view showing a modification of a linkage around the actuator of the select assist device of the automatic transmission.

### [DESCRIPTION OF REFERENCE NUMBERS]

- 1: select part
- 11: select lever
- 12: select knob
- 13: first swingable part
- 131: play hole
- 14: check mechanism part
- 141: pin
- 142: hole portion
- 142a: bottom portion
- 16: wheel
- 17: second swingable part
- 171: projection
- 18: cable attaching lever
- 19: supporting pivot
- 20: assist actuator
- 21: Worm
- 3: control unit
- 31: start halt judging part
- 32: target relative displacement amount part
- 321: memory part
- 322: multiplier
- 323: switch
- 324: adder
- 325: multiplier
- 326: multiplier
- 327: adder
- 328: switch
- 329: computing part
- 33: drive command value computing part
- 34: motor drive control part
- 35: adder
- 36: target actuated position setting part
- 361: switch
- 362: adder
- 363: memory part
- 364: adder
- 365: multiplier
- 366: multiplier
- 367: adder
- 368: switch
- 369: calculating part
- 37: drive command value computing part
- 38: drive command value computing part
- 39: rate limiter part
- 391: calculating part
- 392: adder
- 393: memory part
- 394: memory part
- 395: comparing part
- 396: comparing part
- 397: switch
- 398: switch
- 399: adder
- 400: calculating part
- 401: calculating part
- 4: control cable
- 5: automatic transmission
- 51: control arm
- 52: rotary shaft
- 53: detent plate
- 53a: top portion of cam
- 53b: bottom portion of cam
- 54: leaf spring
- 55: detent pin
- 56: parking rod
- 57: parking pawl
- 58: parking gear
- 500: detent mechanism
- 530: cam surface
- 550: control valve body
- 551: manual valve
- 6: position sensor
- 61: position sensor
- 62: position sensor
- 7: ignition switch
- 8a: control cable
- 8b: control cable
- 8e: control cable
- 91: joint
- 92: input lever
- 93: wheel
- 94: output shaft
- 95: output lever
- 96: joint
- 97: electric motor
- 98: worm

### [BEST MODE FOR CARRYING OUT THE INVENTION]

Hereinafter, best modes realizing a select assist device of an automatic transmission according to the present invention will be described based on embodiments.

### [FIRST EMBODIMENT]

First, a construction of a select assist device of an automatic transmission of a first embodiment of the present invention will b described with reference to the accompanying drawings.

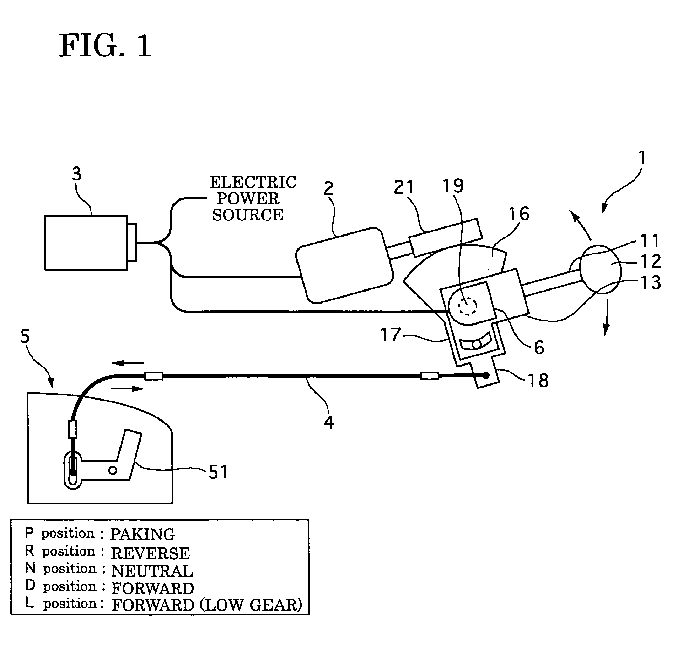

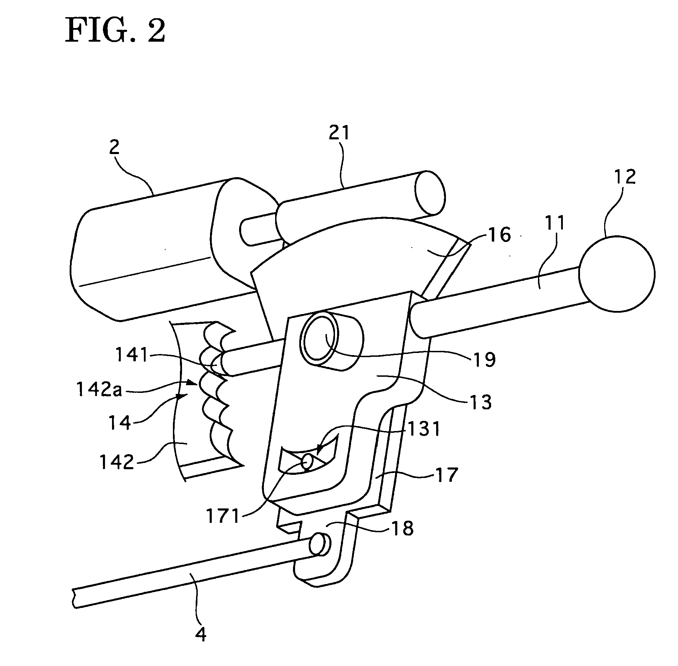

FIG 1 is a side view showing the construction of the select assist device of an automatic gear shifting device of the first embodiment, and FIG. 2 is a perspective view showing a main of a detailed construction of a select part of the select assist device.

As shown in FIG 1, the automatic gear shifting device of the first embodiment mainly consists of the select part 1, an assist actuator 2, a control unit 3, a control cable 4 and an automatic transmission 5.
The select part 1 has a select lever 11, a select knob 12, a first swingable part 13 (corresponding to a first connecting member of the invention), a check mechanism part 14, a wheel 16, a second swingable part 17 (corresponding to a second connecting member of the invention), cable attaching lever 18 and a supporting pivot 19.
The select lever 11 is installed at a position where a driver can operate it, and a select knob 12 is provided on a top portion of the select lever 11 so as to be held by the driver in his or her select operation. The select lever 11 is fixed to the first swingable part 13, which is swingable around a center of the supporting pivot 19, so that the select lever 11 is also swingable. The select lever 11 is set to be 100 mm in length, which is 250 mm shorter than conventional normal select lever.

Further, the second swingable part 17 is provided on the supporting pivot 19. The second swingable part 17 is co-axial with the first swingable part 13, and they are constructed to swing relatively to each other.
On one end side of the second swingable part 17, the wheel 16 is provided, while on the other end side thereof, the cable attaching lever 18 is integrally formed. On end portion of the control cable 4 is connected with the cable attaching lever 18, and the other end portion thereof is connected with a control arm 51 of the automatic transmission 5.
In the first swingable part 13 and the second swingable part 17 which are relatively swingable around the same rotational shaft (the supporting pivot 19), a play hole 131 with a predetermined length in a circumferential direction is provided on the first swingable part 13, and a projection 171 inserted into the play hole 131 is provided on the second swingable part 17. Therefore, the first swingable part 13 and the second swingable part 17 is capable of swinging relatively to each other within the compass in which the projection 171 can move along the play hole 131. The play hole 131 of the first swingable part 13 and the projection 171 of the second swingable part 17 function as a playably connecting mechanism, namely a relative displacement allowably connecting mechanism.

The assist actuator 2 is an electric motor, and its output shaft is provided with a worm 2 which is engaged with wheel 16. The worm 2 and wheel 16 function as a worm gear, so that the assist actuator 2 can drive to swing the second swingable part 17.
In addition, on the supporting pivot 19, there is provided a position sensor 6 (corresponding to a relative displacement detecting means) for detecting a stroke angle of the second swingable part 17 relative to the first swingable part 13 and, or a stroke angle of the first swingable part 13 relative to the second swingable part 17.

Further, on a side, of the first swingable part 13, opposite to the select lever 11, there is provided a check mechanism part 14. The check mechanism part 14 consists of a pin 141 projected from the first swingable part 13 in its outer circumferential side, and a hole portion 142 with which the pin 141 is engaged. The check mechanism part is constructed in such a way that the pin 141 is urged by a spring contained in the first swingable part 13 so that a top portion thereof is pushed in its projecting direction. The top portion of the pin 141 engages with the hole portion 142, and the hole portion 142 has a wave-like shape, having bottom portions corresponding to five select positions (P, R, N, D and L). The check mechanism part 14 maintains a selected select position, and it prevents the select device from being inputted into an unintended select position without a select operation, for example, due to vehicle vibrations and the like.

The automatic transmission 5 has the detent mechanism.

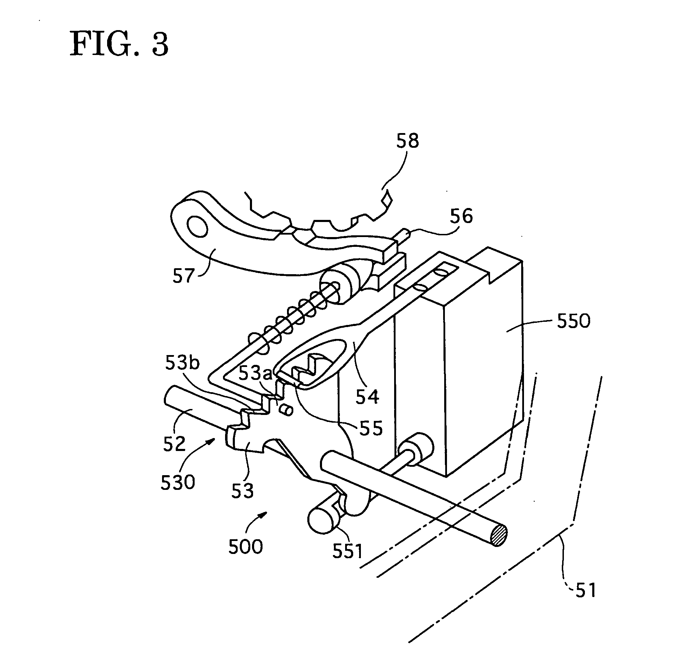

FIG 3 is a perspective view showing a construction of the detent mechanism 500 of the automatic transmission.
The control arm 51 is fixed with the rotary shaft 51, which connects wit a detent plate 53. On a top portion of the detent plate 53, there is formed with a can surface 530 with bottom portions 53b, corresponding to five select positions (P, R, N, D and L), and top portions 53a. The selected select position is maintained by an engagement of the detent pin 55 formed on a tip portion of the leaf spring 54 and one of the bottom portions 53b, which prevents an intended select position to be selected due to the vibrations and the like of the motor vehicle.

That is, an actuating force of the assist actuator 2 or an operating force of the select lever 11 rotates the rotary shaft 53, which moves the detent plate 53 relative to the detent pin 55. At this time, the detent pin 55 moves over the top portion 53s to engage with the bottom portion 53b corresponding to a next select position, and the engagement state is maintained by an elastic force of the leaf spring 54. This elastic force functions as a main load generated in a select operation.

Incidentally, the detent plate 53 is rotatably connected with one end portion of a parking rod 56. When the select lever 11 is moved to the P position, the parking rod 56 prevents a parking gear 58 to rotate by using a parking pawl 57, thereby locking not-shown driving wheels. When the motor vehicle is parked at the P position on a slope, a load of the motor vehicle is added to the engagement parts according to its inclination to lock the driving wheels, functioning as wedge effect. In the first embodiment, detent forces (checking forces) are generated in the automatic transmission 5 and the select part, respectively.

In addition, a lower portion of the detent plate 53 is engaged with the manual valve 551 contained in the control valve body 550, and the manual valve 551 is moved in its axial direction according to a rotation position of the detent plate 53 to be capable of shifting select positions of the automatic transmission 5.

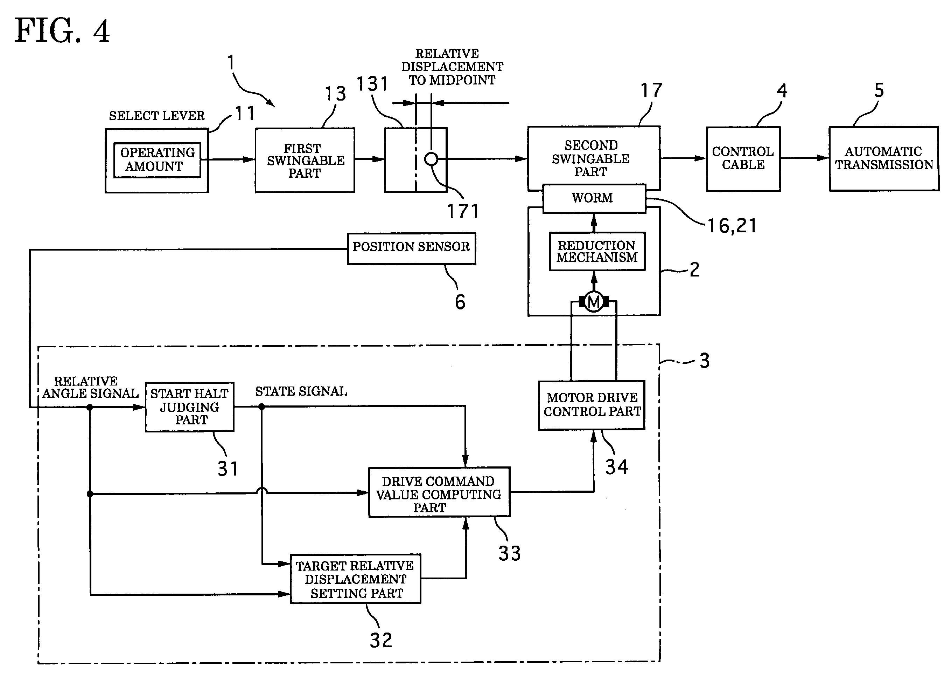

The control unit, corresponding to an assist control means of the present invention, sets a drive command value of the assist actuator 2 based on a detected relative displacement amount to PWM-control output duty ratios of the electric motor.
A control block diagram of the control unit 3 is shown in FIG. 4.
In the select part, a stroke change of the select lever 11 operated to shift the select positions corresponds to a relative rotational change of the first swingable part 13 and the second swingable part 17, and it also corresponds to a relative displacement amount change of the play hole 131 and the projection 171. This relative rotational change is detected by the position sensor 6 to be outputted to the control unit 3.

The control unit 3 mainly includes a start halt judging part 31, a target relative displacement amount part 32 and a drive command value computing part 33.
The start halt judging part 31 judges a start of the assist actuator when the relative displacement amount exceeds a start threshold value and judges a start halt when the relative displacement amount is equal to or less than the start threshold value, then outputting a judgment result.

The target relative displacement amount part 32 sets a target relative displacement amount (a target relative angle) which gradually decreases from a predetermined value toward zero. Herein, the predetermined value of the target relative displacement amount is appropriately determined by multiplying the relative displacement amount of a start of actuation (a start threshold value) by a gain for example. The start halt judging part 31 and the target relative displacement amount setting part 32 correspond to an assist suppressing means of the present invention.
The drive command value computing part 33 computes a drive command value to approximate the relative displacement amount to the target relative displacement amount (to approximate a difference therebetween to zero) to output it.
The motor drive control part 34 drives the assist actuator 2 according to the drive command value.

Next, the target relative displacement amount setting part 32 will be described in detail.

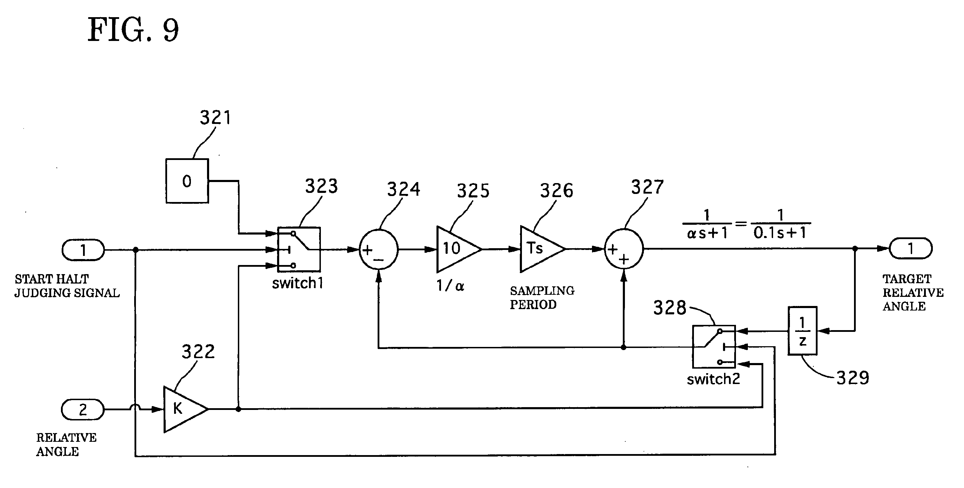

FIG. 9 is a block diagram of the target relative displacement amount setting part 32.
The target relative displacement amount setting part 32 includes a memory part 321, multipliers 322, 325 and 326, switches 323 and 328, adders 324 and 327 and a computing part 329.
The memory part 321 stores "zero" as the relative displacement amount to output it.
The multiplier 322 multiplies the relative displacement amount by the gain set in order to appropriately change the target relative displacement amount at the start of actuation.

The switch 323 is shiftable according to a start halt judgment signal so that it outputs an output of the memory part 321 on the occasion of the start, while it outputs an output of the multiplier 322 on the occasion of the halt.
The adder 324 subtracts an output of the switch 328 from the output of the switch 323.
The multiplier 325 multiplies an output of the adder 324 by ten as a computation of 1/α.
The multiplier 326 multiplies an output of the multiplier 325 by Ts of a sampling period.

The adder 327 adds the output of the switch 328 to the output of the adder 326.
The switch 328 shifts its output based on the start halt judgment signal so that it outputs an output of the computing part 329 on the occasion of the start, while it outputs the output of the multiplier 322 on the occasion of the halt.
The computing part 329 outputs 1/Z, the output of the adder 327 before its computation.

Next, the operation of the select assist device of the automatic transmission of the first embodiment will be described.

### <Select Position Control Process Of Automatic Transmission>

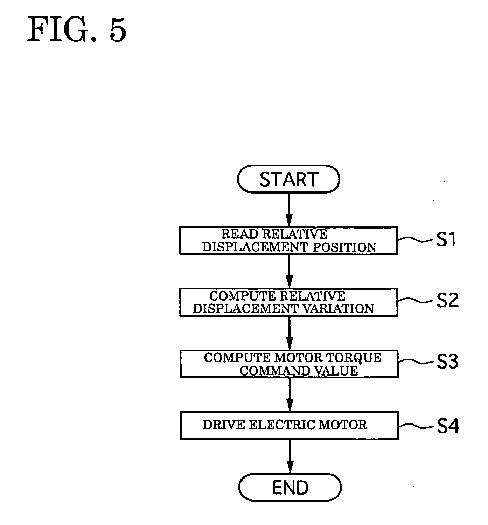

FIG 5 is a flow chart showing a flow of a basic process of a select position control process executed by the control unit 3.

At a step S1, the control unit 3 is inputted with the relative displacement amount signal from the position sensor 6 to read the relative displacement amount.

At a step S2, it computes a variation from a midpoint of the relative positions based on the read relative positions.

At a step S3, it sets a motor torque command value (a drive command value) based on the variation from the midpoint of the relative positions.

At a step S4, it drives the electric motor of the assist actuator 2 according to the motor torque command value.

### <characteristic Of Operational Reaction Force of AUTOMATIC TRANSMISSION>

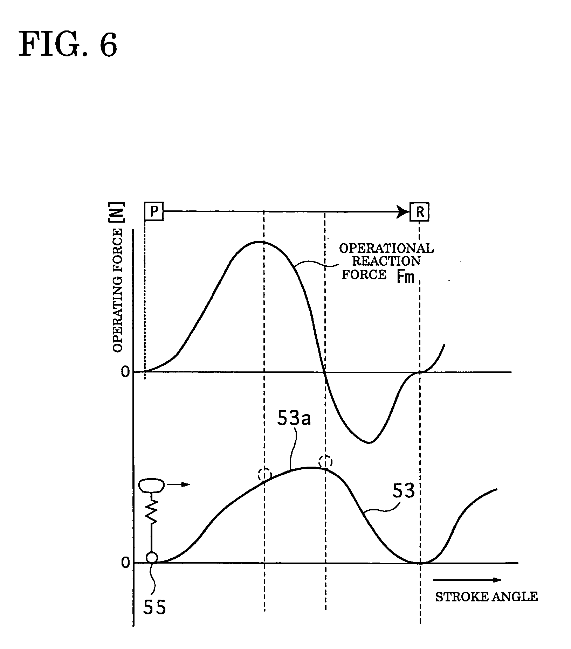

FIG 6 is a characteristic diagram showing an operational reaction force acting on the output shaft of the assist actuator, and an operational reaction force acting on the select knob 12, in a select operation in a direction from a P position to an R position. This operational reaction force characteristic shows the operational reaction force [N] acting on the output shaft and the operational reaction force [N] acting on the select lever 11, according to the operating position (stroke angle) of the select lever 11.

Incidentally, in a case where the operating force of the select lever 11 is transmitted to the automatic transmission 5, the operational reaction force is a resultant force of the load generated by the detent mechanism of the select part 1, frictions generated by the transmitting mechanisms and others. Accordingly, when the driver executes the select shift operation under the select position shifting control, a manual operation force is needed to be larger than the operational reaction force.

In addition, the operational reaction force on the output shaft of the electric motor of the assist actuator 2 is a resultant force of the load generated by the detent mechanism, friction forces generated by the control cables 4, an inertia of the electric motor and others. Accordingly, in order to shift the select positions by using the assist actuator 2, the drive force is needed to be larger than the operational reaction force.
As shown in FIG 6, the operational reaction force, generated when the select lever 11 is operated in the direction of the P position → the R position, first, acts, between each adjacent positions, in a direction (a direction of the D position → the N position) opposite to the operation direction of the select lever 11 (a drive direction of the assist actuator 2), and after its peak, it changes its directions, in the same direction as the operation direction (the direction of the P position → the R position), then becoming zero near the next select position (a halt position). This characteristic is due to load generated when the detent pin 55 or the pin 141 rides over the top portions 53a or the top portions of the hole portion 142. That is, until the detent pin 55 or the pin 141 rides over the top portions 53a or the top portions of the hole portion 142, the elastic force, generated by the leaf spring 54 or the not-shown spring urging the pin 141, produces the resistance force, and after the detent pin 55 or the pin 141 rides over the top portions 53a or the top portions of the hole portion 142, a pull-in force (an inertia force) is produced by the detent pin 55 or the pin 141 falling down into the bottom portion 53b next to the top portion 53a.

### <Select Position Shifting Control Of Automatic Transmission>

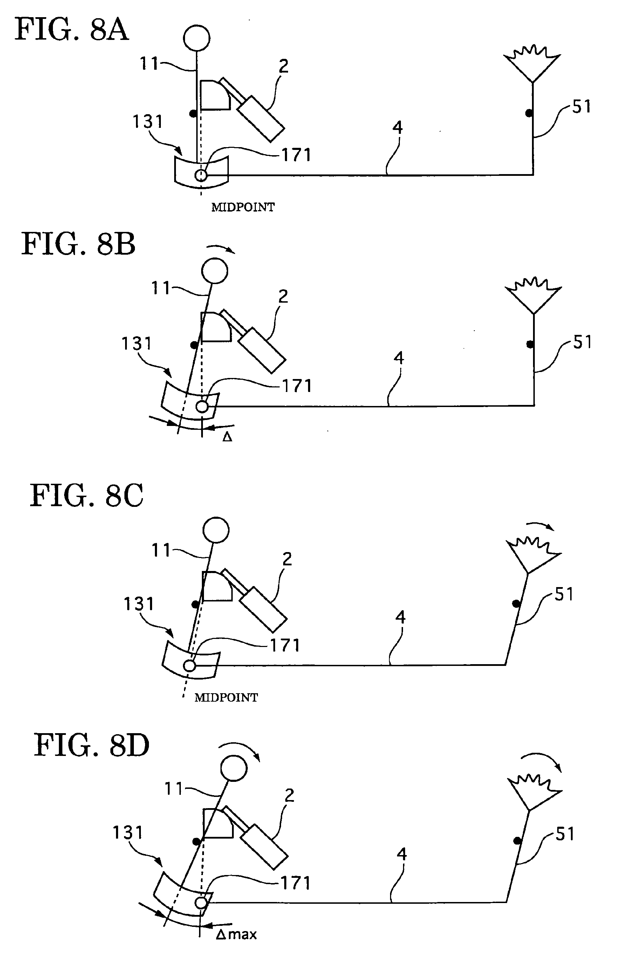

In the select assist device of the automatic transmission of the first embodiment, as an example of a state in advance of the select operation, the first swingable part 13 and the second swingable part 17 are in a non-contact state, where the projection 171 is located at the midpoint of the relative positions in the play hole 131, that is, in a state where it has a play amount in both of the operational directions, as shown in FIG. 8A.

Operating the select lever 11 from this state changes the relative displacement amount between the play hole 131 and the projection 171, while, since they are within a position range in the non-contact state, the control cables 4 are not moved. This change of the relative displacement amount is detected by the position sensor 6, and the drive command value computing part 33 sets the motor drive control command value according to the variation of the relative positions, driving the electric motor of the assist actuator 2. The drive output of the assist actuator 2 is transmitted to the wheel 16 through the worm 21, accordingly rotating the second swingable part 17 to drive the control arm 51 of the automatic transmission through the control cables 4, thereby shift the select positions of the automatic transmission.

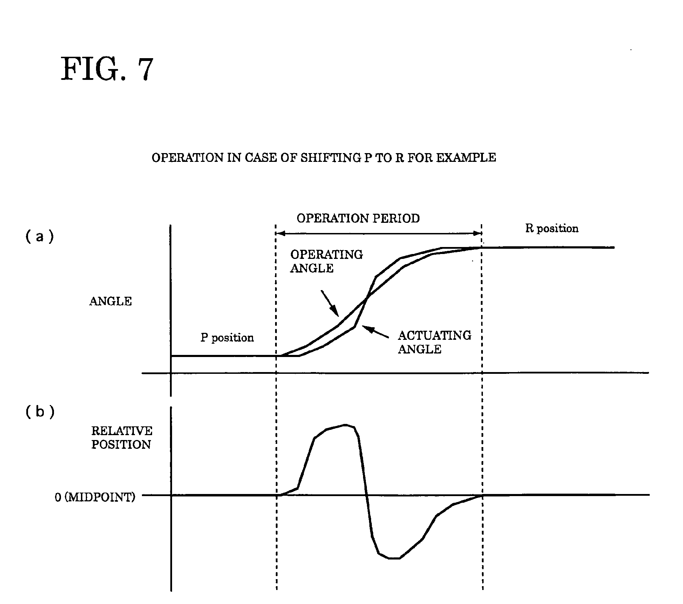

Incidentally, a backward movement of the control cables 4 due to the rotation of the second swingable part 17 makes the relative positions of the play hole 131 and the projection 171 to return near the midpoint. That is, the drive command value computing part 33 controls the relative displacement amount to be maintained near the midpoint of the relative positions, so that the control arm 51 of the automatic transmission follows the movement of an operational movement of the select lever 11 as shown in FIGS. 8A to 8C, to shift the select positions.
They move as though the select lever 11 and the control arm 51 of the automatic transmission 5 are connected with each other by the control cables 4.
Incidentally, FIG 7 shows a change state of the relative positions when the select lever 11 is moved from the P position to the R position as an example. A relationship between an operation angle and an actuation angle is indicated in FIG 7, where the operation angle is an angle inputted to the select lever 11 and the actuation angle is an angle of the control arm 5. That is, at a start of the control, the actuation angle follows the operation angle, while the actuation angle precedes the operation angle due to the pull-in force, toward the next select position, generated by the detent mechanism during a last half of the control.

### <Improvement In Operation Feeling>

In the first embodiment, in a case where a normal control is carried out as described above, the relative positions of the play hole 131 of the first swingable part 13 and the projection 171 of the second swingable part 17 are maintained at the midpoint, and accordingly its operation feeling is not deteriorated by avoiding a shock which is transmitted to the select lever 11 through the mechanically transmitting system where the first swingable part 13 and the second swingable part 17 are contacted with each other on the way of the select operation.

The operation feeling in the first embodiment is produced only by the detent mechanism 14 of the select part 1. Therefore, it becomes possible to construct the device with a lighter operation feeling of the select lever 11, although the lever 11 is shorter than the conventional ones, by appropriately setting dimensions and a profile of the top portions of the cam adapted for the hole portion 142 and the pin 14, the strength of the spring and others.

### <Improvement In Operation Feeling At Startup On Slope and Reduction In Size and Weight>

In a case where the select lever 11 is operated from the P position to the D position in order to start on a steep slope, the operating force becomes larger because a release force for pulling out the parking rod becomes larger. In the select assist device of the automatic transmission of the first embodiment, in such a case where the load becomes larger, the projection 171 contacts with an end wall portion forming the play hole 131, that is, they are in a state with no play amount in the playably connecting mechanism. Therefore, The operating force inputted to the select lever 11 by the driver is transmitted to the second swingable part 17 and the control cables 4, where the operating force, in addition to the assist force produced by the electric motor of the assist actuator 2, pulls out the parking rod, which reduces the operating force to provide a light operation feeling. In addition, a rating of the electric motor can be decreased, thereby enabling the system to be reduced in size and weight.

### <Improvement n Operation Feeling Of Rapid Select Operation And Reduction in Cost>

In the select assist device of the automatic transmission of the first embodiment, in a case where the select lever 11 is rapidly operated, the projection 171 contacts with the wall portion of the play hole 131, that is, they are in a state with no play amount in the playably connecting mechanism. Therefore, The operating force inputted to the select lever 11 by the driver is transmitted to the second swingable part 17 and the control cables 4, where the operating force, in addition to the assist force produced by the electric motor of the assist actuator 2, pulls out the parking rod, which reduces the operating force to provide a light operation feeling. In addition, in the system, a necessary response of the electric motor can be reduced, thereby setting a rating thereof can be also reduced.

### <Mechanical Connection Between Select Lever And Control Arm Of Automatic Transmission>

Further, in the first embodiment, in fail of the electric/electronic parts, operating the select lever 11 so as to exceed the non-contact range removes a movable amount, namely the play amount, and causes the first and second swingable parts to be connected with each other to rotate the control arm 51 of the automatic transmission 5 by his or her operating force through the control cables 4.

### <About Vibration At Startup>

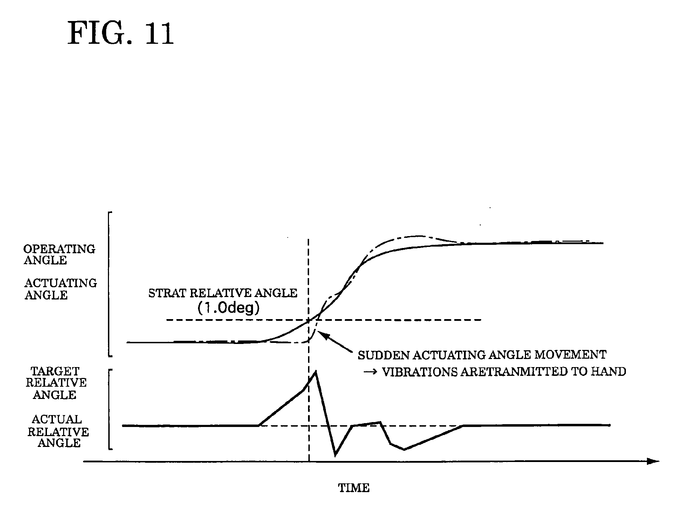

In the select assist device of the automatic transmission, the assist control is carried out so that the projection does not contact with the wall portion of the play hole 131 in a state of a limit relative displacement amount thereof.
When the relative displacement amount exceeds the predetermined value and the assist control is started in a case where they do not contact, being within the limit relative displacement amount, there causes a large relative displacement amount, which suddenly produces a large drive command value to generate vibrations due to sudden start of the assist actuator 2 at a large amplitude.
Even in the non-contact state where the relative displacement amount is within the limit relative displacement amount, the vibrations are transmitted to the select lever 11 through other parts. This deteriorates the operation feeling because of a transmission of the vibrations to a hand of the driver at the startup of the assist control as shown in FIG 11.
On the contrary, the first embodiment solves the above problem.

### <Assist Control Process>

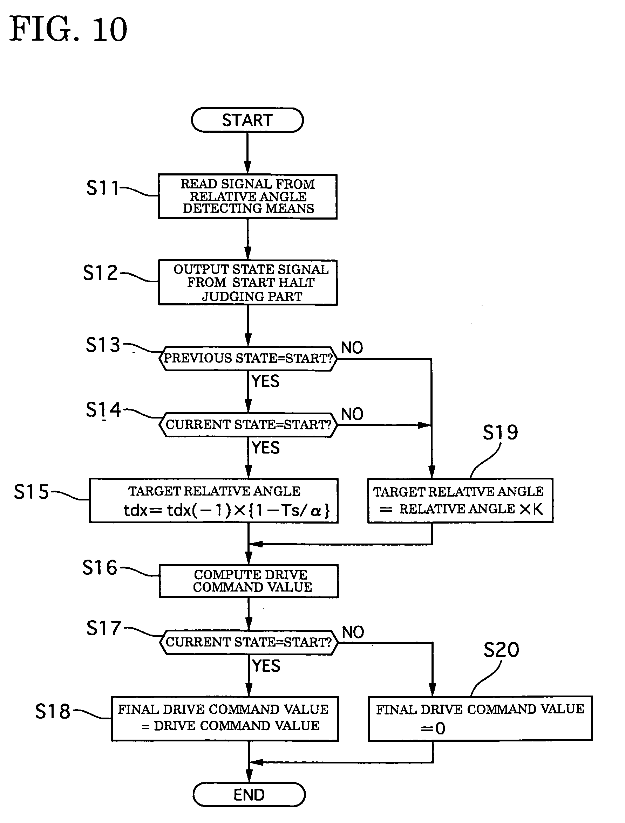

FIG. 10 is a flow chart showing a flow of the assist control process executed by the control unit of the select assist device of the automatic transmission of the first embodiment, and hereinafter each step thereof will be described. Incidentally, although a part of this flow chart overlaps with the basic flow shown in FIG 5, this flow chart explains the technical features of the first embodiment.

At a step S 11, the control unit 3 is inputted with the relative displacement amount detected by the position sensor 6, and then the flow goes to a step S12.

At the step S12, it is inputted with a state signal from the start halt judging part 31, and then the flow goes to a step S13.

At the step S14, it judges whether or not the previous state is a start state. If it is the start state, the flow goes to a step S 14, while if it is a halt state, the flow goes to a step S 19.

At the step S 14, it judges whether or not the current state is the start state. If it is the start state, the flow goes to a step S15, while if it is the halt state, the flow goes to the step S 19.

At the step S 15, the target relative displacement amount tdx is computed by the following formula: tdx = tdx(-1) × {1 - Ts/α}

At a step S16, the drive command value is computed so as to approximate it to the target relative displacement amount.
At a step S 17, it judges whether or not the current state is the start state. If it is the start state, the flow goes to a step S 18, while if it is the halt state, the flow goes to a step S20.

At the step S18, a final drive command value is set to be the drive command value, and then it is outputted.

At the step S 19, the final command value is set to be zero, and then it is outputted.

### <Vibration Suppressing Operation>

In the first embodiment, when the start halt judging part 31 judges the halt (at the steps S13 and S 14), a value obtained from the multiplier 322 by multiplying the relative displacement amount by the gain is selected to be inputted to the switches 323 and 328 of the target relative displacement amount setting part 32. Accordingly, the adder 324 subtracts the same value from the value obtained from the multiplier 322 by multiplying the relative displacement amount, its result being zero. Then, the adder 327 adds zero to the multiplication value of the relative displacement amount and the gain, and consequently the multiplication value is outputted (at the step S19). In this case, the gain K is set to be 0 < K < 1.

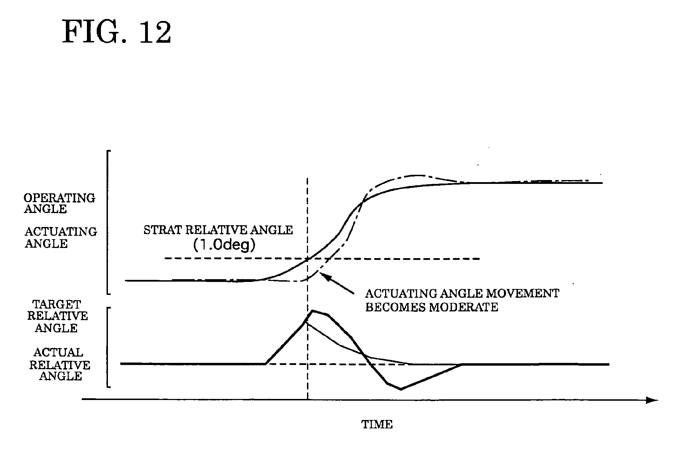

Next, when the start halt judging part 31 judges the start (at the steps S 13 and S14), in the target relative displacement amount setting part 32, the input to the switch 323 becomes to be zero, and the input to the switch 328 becomes a value corresponding to an output of the computing part 329 which was computed just before the latest computation. Consequently, in the target relative displacement amount setting part 32, the current value is set to be the multiplication value of the relative displacement amount obtained immediately before and the gain, and the input value after then is set to be zero, so that it functions as a low-pass filter with a time constant. Therefore, it gradually approaches near zero (as shown in a lower part of FIG 12).

The drive command value computing part 33 computes the drive command value so that it can approximate the target relative displacement amount, consequently the variation between the target relative displacement amount and the relative displacement amount becoming to be a small value at the startup and immediately after the startup. Accordingly, the variation input becomes smaller arid the drive command value becomes smaller. This causes the assist actuator to moderately rise (as shown in an upper part of FIG 12).
Then, as shown in the lower part of FIG 12, the actuating position is moderately moved by the drive of the assist actuator 2, which suppresses the vibrations remarkably.

If the target relative displacement amount is not as described above and it is set to be zero, the drive command value becomes to be greatly larger to suddenly move the actuating position, causing the vibrations which are transmitted to the driver through the select lever 11 as shown in FIG 11.

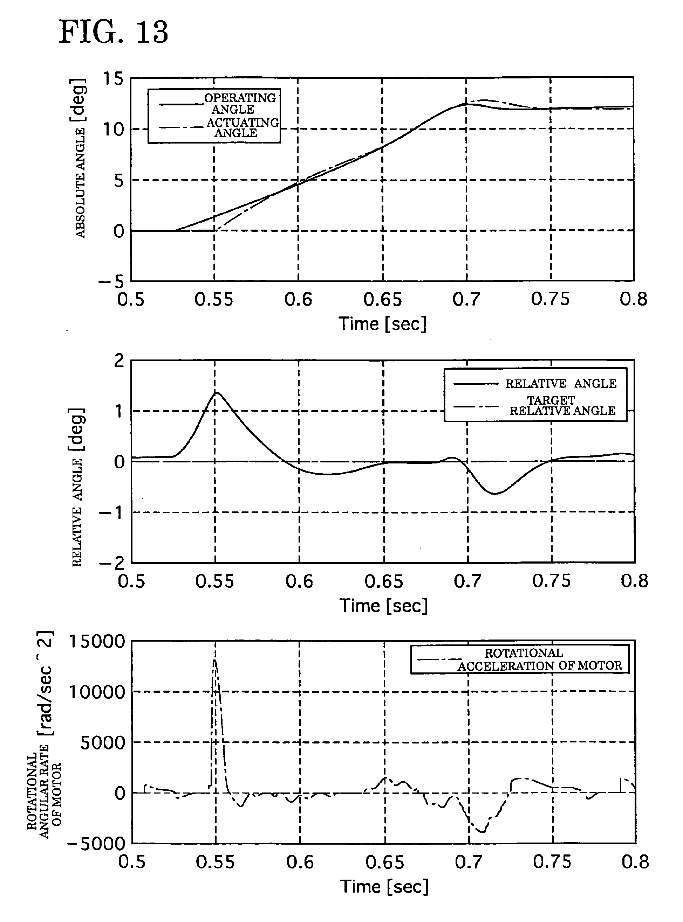

FIG 13 is a time chart showing a test result of the operating position, the actuating position, the relative displacement amount and the rotational angular rate when the target relative displacement amount is set to be a constant value of zero in the select assist device of the automatic transmission.

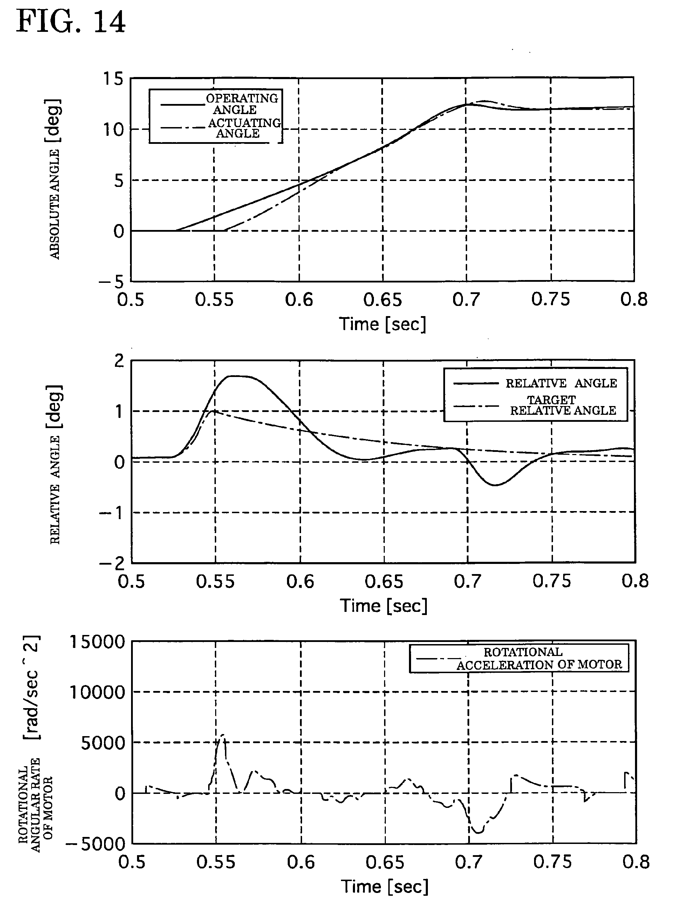

FIG 14 is a time chart showing a test result of the operating position, the actuating position, the relative displacement amount and the rotational angular rate in the select assist device of the automatic transmission of the first invention.
It is understood from the test result that a large relative displacement amount occurs at the startup of the assist actuator 2 when the target relative displacement amount is set to be the constant value of zero, and the assist actuator 2 is suddenly driven responding to the displacement amount to cause the vibrations due to a sudden change of the rotational angular rate of motor of the assist actuator 2.

On the other hand, in the first embodiment, as shown in FIG 14, setting the target relative displacement amount to be a value close to the relative displacement amount at the startup keeps the drive command value to be small, and then it is moderately increased. Therefore, the sudden change of the rotational angular rate of the motor of the assist actuator 2 is suppressed, thereby the vibrations being decreased.

Next, the effects of the first embodiment will be described.
The select assist device of the select assist device of the first embodiment can obtain the following effects listed below.
(1) Since the select lever can be shortened by approximately 150 mm in a length projecting into an inner space of the passenger room and the select lever 11 and the control arm 51 are capable of having the play amount and connectable with each other through the control cables 4, the design freedom of the layout in the passenger room can be extended relative to the conventional ones, so that an instrument panel, the select lever 11 and others are capable being arranged at more appropriate positions.
In addition, since the select lever 11 and the control arm 51 are mechanically connectable with each other, eliminating the play amount, through the control cables 4, the driver can manually shift the select positions in a fail case of the assist actuator 2 and the control nit 3.

Further, since the play hole 131 of the first swingable part 13 and the projection 171 of the second swingable part 171 can shiftably provide the non-contact state and the contact state therebetween and they can be maintained at the midpoint within the play amount, the select assist device can give the driver an uncomfortable feeling due to a shift from the non-contact state to the contact state in the normal select operation.
Further, since they are set in the non-contact state in the normal select operation, the check mechanism 14 of the elect part 1 can provide a comfortable feeling so that the driver can operate with light operating force, accommodated to downsizing of the select lever 11, acting no friction resistance generated in a latter phase of the select operation in the contact state.
Further, since, in the first embodiment, the select assist device can have the play amount in the non-contact state, it becomes easier to adjust their synchronization of the select lever 11 and the automatic transmission side when they are assembled.

Further, at the start on a steep slope where the load generated in the select operation is excessive and at the sudden select operation, the assist force is added from the motor to the operating force of the driver, which enables the driver to lightly operate the select lever 11. In addition, the operating force is also transmittable, a rating of the motor can be decreased and the response demand of the motor can be smaller.

Further, the operations and effects of the select assist device of the automatic transmission of the first embodiment, which are more advantageous than those of a shift by wire system, will be described.
In the operation and the effects as described above, (A) In the normal operation, the actuating force of the assist actuator shifts the select positions without transmitting the manually operating force of the driver to the automatic transmission. (B) In fail, the manually operating force shifts the select positions without the actuating force of the assist actuator. (C) In the case of the excessive load, the resultant force of the manually operating force and the actuating force of the assist actuator shifts the select positions (the assist state). In particular, the above (B) and (C) are the operations and effects more advantageous than those of the shift by wire system.

Further, In the states of the above (A) and (C), it is advantageous because they are variable. That is, in the select assist device of the automatic transmission of the first embodiment, a ratio between the operating force of the driver and the actuating force f the assist actuator can be variably changed according to a vehicle running state. For example, when the driver shifts from the R position to the P position at high vehicle speed, the assist force of the motor is suppressed, with the operating force of the driver being increased (making the select operation heavy), which prevents the motor vehicle from being suddenly stopped due to an improper select operation such as one caused by a finger touch. Thus, in addition to the improvement in the operation feeling, the select assist device of the first embodiment can prevent the improper select operation and restrain cause which may generate the improper select operation, by making the select lever heavier.

Further, comparing it to the shift by wire system, in the shift by wire system, the response of the system and accuracy of setting-out are easily deteriorated due to disturbances such as a temporal change of a zero point of a potentiometer (the position sensor), a fluctuation in the electric power source and a drift of input electric voltage of a circuit. In the select assist device of the automatic transmission of the first embodiment, even when the fluctuation occurs in the system to a certain extent, the driver can operate, the fluctuation being absorbed through the transmitting mechanism. Therefore, it has a nice robust stability of the system.
Further, when the shift by wire system fails, the driver needs to search an emergency lever to carry out an operation which is different from the normal one. This causes large burden on the driver who is thrown into a panic. In the select assist device of the automatic transmission of first embodiment, although the operating force becomes heavier, the driver can go on driving, keeping his or her calm, by executing the select operation similar to the normal operation.

Further, in the first embodiment, the control unit 3 suppresses the sudden drive immediately after the start of the assist actuator 2, and accordingly it decreases the vibrations transmitting to a hand of the driver at the startup of the assist actuator 2. This provides the driver with the comfortable feeling.

(2)
Since the control unit 3 has the start halt judging part 31 for judging the star halt by comparing the relative displacement amount and the start threshold value, the target relative displacement amount setting part 32 for setting the predetermined value at the start and gradually decreasing it after the start, and the drive command value computing part 33 for computing the drive command value so that it approximate the relative displacement amount to the target displacement amount, it suppresses the occurrence of the abrupt drive command value due to the target relative displacement amount at the start, thereby decreasing the vibrations transmitting to the hand of the driver at the start. This provides the driver with the comfortable feeling.

### [SECOND EMBODIMENT]

A second embodiment controls an actuating position to follow an operating position, setting a target actuating position that gradually changes from a predetermined value smaller than the operating position at a startup toward the operating position.
A construction of the second embodiment will be described.

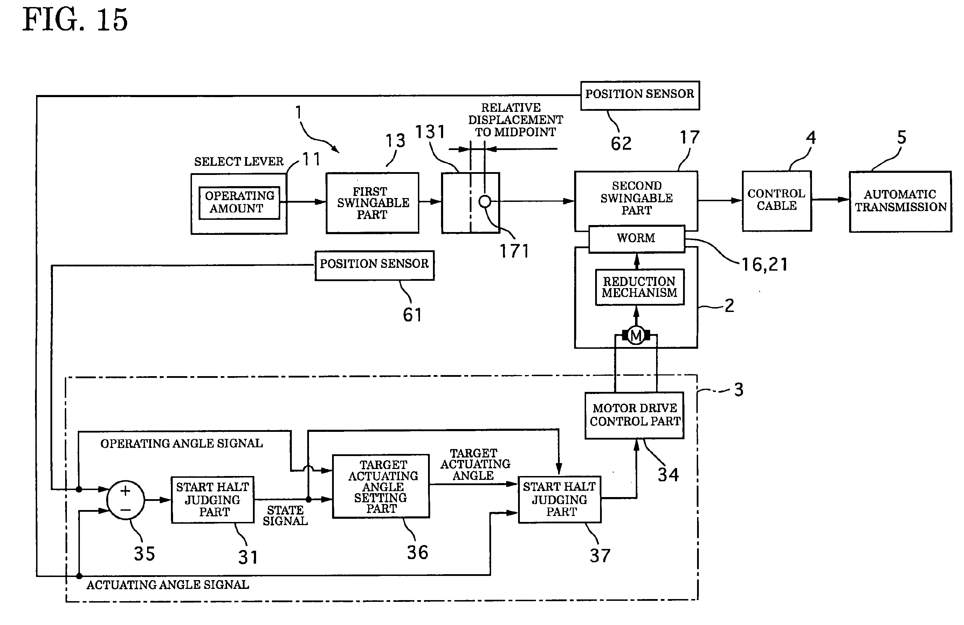

FIG. 15 is a block diagram of a control unit of a select assist lever device of an automatic transmission of the second embodiment.

In the second embodiment, there is provided at a supporting axis 19 a position sensor 61, corresponding to an operating position detecting means of the present invention, for detecting a stroke angle of a first swingable part 13 relative to a fixed member, namely an operating angle of a select lever, and there is also provided at the supporting axis 19 a position sensor 62, corresponding to an actuating position means of the present invention, for detecting a stroke angle of a second swingable part 17 relative to the fixed member, namely a rotation position of a control arm 51 of the automatic transmission 5, through control cables 4. A relative displacement amount can be obtained by computing a difference between the operating position detected by the position sensor 61 and the actuating position detected by the position sensor 62.

An adder 35 computes the relative displacement amount by subtracting the actuating position from the operating position to output its result.
An target actuating position setting part 36 sets a target actuating position that is set to a predetermined value smaller than the operating position at a startup toward the operating position and then is set to gradually increase toward the operating position, and outputs its result. The target actuating position setting part 36 corresponds to an assist suppressing means of the present invention.
A drive command value computing part 37 computes a drive command value so that it approximate the actuating position to the target actuating position (so that it approximate a difference between the actuating position and the target actuating position to zero). Incidentally, it outputs zero at the halt of the assist actuator 2.

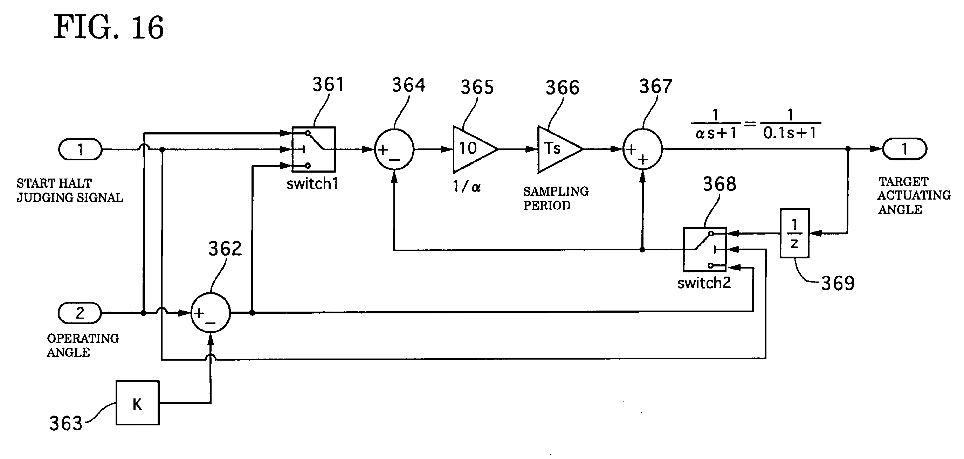

FIG 16 is a block diagram of the target actuating position setting part 36. The target actuating position setting part 36 includes switches 361 and 368, adders 362, 364 and 367, a memory part 363, multipliers 365 and 366 and a computing part 369.
The switch 361 is shifted based on a start halt judgment signal to output the detected operating position at a start of the assist actuator and to output an output of the adder 362 at a halt thereof.
The adder 362 subtracts a predetermined value K from the operating position to output its result.
The adder 364 subtracts an output f the switch 368 from the output of the switch 361.
The multiplier 365 multiplies its input by ten as a computing process of 1/α.
The multiplier 366 multiplies its input by a sampling period Ts.

The adder 367 adds the output of the multiplier 366 and the output of the switch 369 to each other.
The switch 368 is shifted based on the start halt judgment signal to output an output of the computing part 369 at the start and to output the output of the adder 362 at the halt.
The computing part 369 outputs 1/Z, namely the output of the adder 367 that is obtained by a previous adjacent computation.
The other construction is similar t that of the first embodiment, and therefore its description is omitted.

The operation of the select assist device of the automatic transmission of the second embodiment will be described.

### <Assist Control Process>

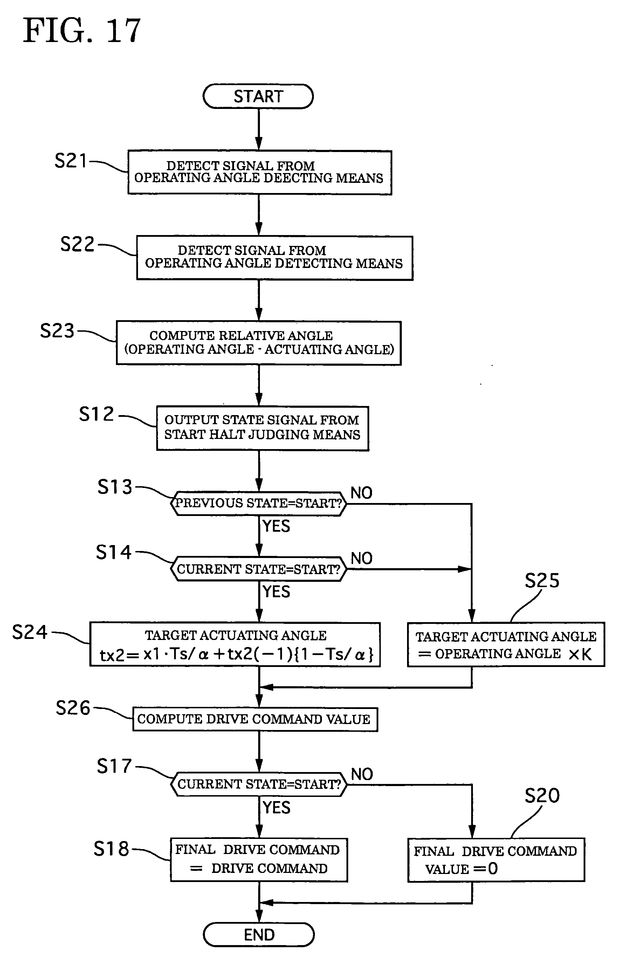

FIG 17 is a flow chart showing a flow of an assist control process executed by a control unit of the select assist device of the automatic transmission of the second embodiment, and hereinafter each step thereof will be described. Incidentally, the same reference number is assigned to a step that carries out the process similar to that in the flow chart of the first embodiment shown in FIG 10, and its description is omitted.

At a step S21, the control unit is inputted with the operating position detected by the position sensor 61.

At a step S22, it is inputted the actuating position detected by the position sensor 62.

At a step S23, the relative displacement amount is computed by subtracting the actuating position from the operating position.

At a step S24, the target actuating position tx2 is computed by using the following formula: tx2 = x1·Ts / α + tx2(1-) {1 - Ts / α}, where tx2 is the target actuating position, the operating position is the operating position, Ts is a sampling period and α is a time constant of a low-pass filter.

At a step S25, the target actuating position is computed by a formula of the operating position -K.

At a step S26, the drive command value is computed so that the actuating position can approximate to the target actuating position.

### <Vibration Suppressing Operation>

In the second embodiment, when the start halt judging part 31judges the halt (the steps S13 and S 14), as the inputs of the switches 361 and 368 of the target actuating position computing part 36, a value obtained from the adder 362 by subtracting the predetermined value K from the operating position. Accordingly, since, the adder 364 computes the subtraction between the value obtained by subtracting the predetermined value K from the operating position and the same value, its result becomes zero. Then the adder 367 adds zero and the value of the subtraction between the predetermined value K and the operating position, and consequently the value of the subtraction is an output at the halt (the step S25).

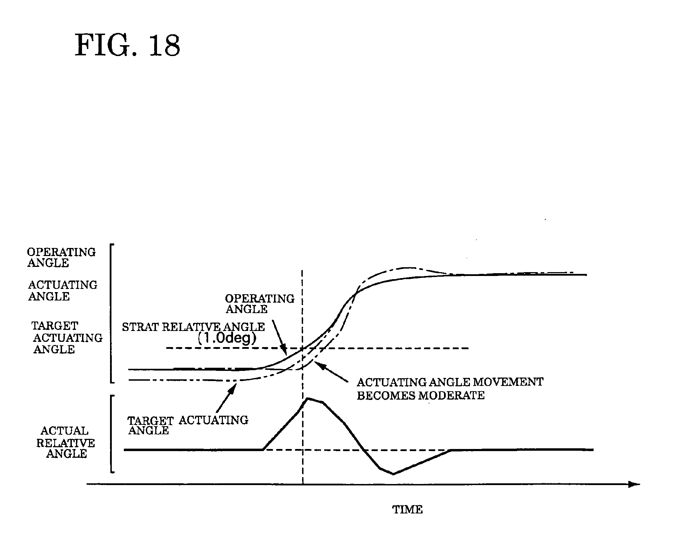

On the other hand, when the star halt judging part 31 judges the start (the steps S 13 and S 14), in the target actuating position setting part 36, an input of the switch 361 is set to be the operating position and an input of the switch 368 is set to be an output that is a previous adjacent output of the computing part 369. Consequently, I the target actuating position setting part 36, a current value is set to a value obtained by subtracting the predetermined value K from the operating position immediately before the current operating position, and then the following input is set to the operating position, functioning as the low-pass filter with the time constant so that the value gradually approximates to the operating position as shown in FIG 18.

When the drive command value is computed by the drive command value computing part 37 so that it approximates to the target actuating position, the difference between the target actuating position and the actuating position becomes small. Therefore, its variation input becomes small and the drive command value also becomes small, thereby the start of the assist actuator 2 moderately rising as shown in FIG. 18. Thus, the actuating position is moderately moved by the drive of the assist actuator 2 as shown in FIG 12, thereby the vibrations being remarkably suppressed.

The effects of the second embodiment will be described.
The select assist device of the automatic transmission of the second embodiment has the following effects.
(3) There is provided the position sensor 61 for detecting the operating position of the select lever 11 and the position sensor 62 for detecting the actuating position of the control lever 51 of the automatic transmission. There is also provided the control unit 3 for controlling the drive of the assist actuator 2 so that the actuating position follows the operating position, and the control unit 3 includes the start halt judging part 31 for judging the start of the halt based on the difference between the operating position and the actuating position, the target actuating position setting part 36 for setting the target actuating position so that at the start it is set to be the value smaller than the operating position and after the start it gradually increases toward the operating position, and the drive command value computing part 37 for computing the drive command value to approximate the actuating position to the target actuating position. Therefore, setting of the target actuating position can suppress the sudden occurrence of the drive command value at the start, thereby decreasing the vibrations transmitting to the hand of the driver at the start. Therefore, a comfortable operation feeling can be obtained.
The other operation and effects are similar to those of the first embodiment, and their descriptions are omitted.

### [THIRD EMBODIMENT]

A select assist device of an automatic transmission of a third embodiment is an example in which there is provided a rate limiter part that suppresses a change rate of a drive command value so as to be within a predetermined range.
A construction of the third embodiment will be described.

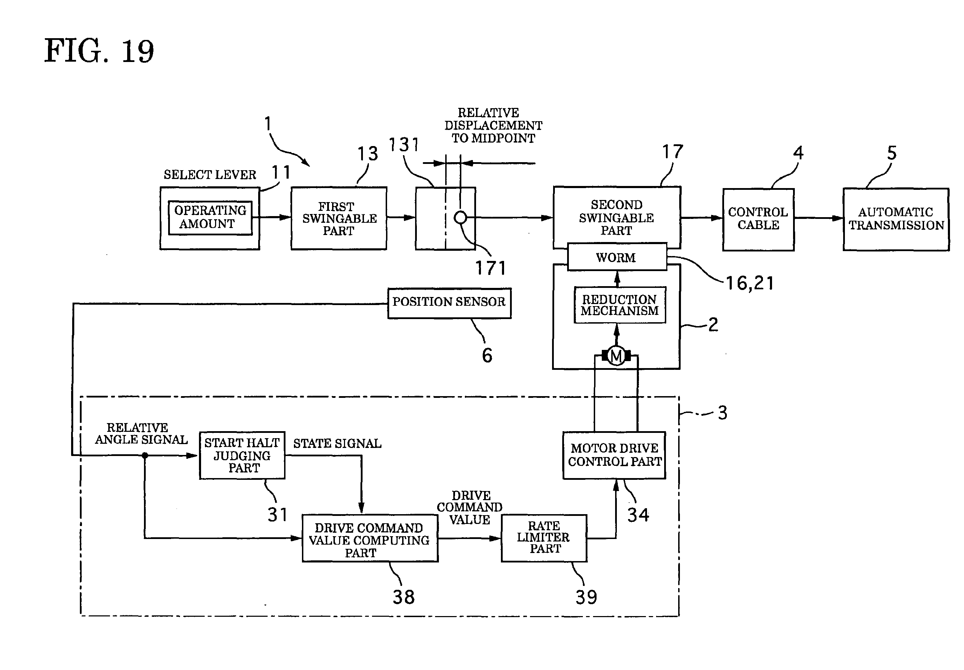

FIG 19 is a block diagram of a control unit select assist device of the automatic transmission of the third embodiment.
A drive command value computing part 38 computes the drive command value so that a relative displacement amount approximate to zero.
Incidentally, it outputs zero at a halt of an assist actuator.
The rate limiter part 39 computes a variation between a change speed in the drive command value and a previous change speed thereof. Then it sets the change amount to be a maximum value in the predetermined range when the variation exceeds the predetermined range, while it sets the variation to be the change amount. Then it outputs a value, obtained by integrating a sum of the change amount and the change speed of the previous dive command value, as a final drive command value. The rate limiter part 39 corresponds to an assist suppressing means of the prevent invention.

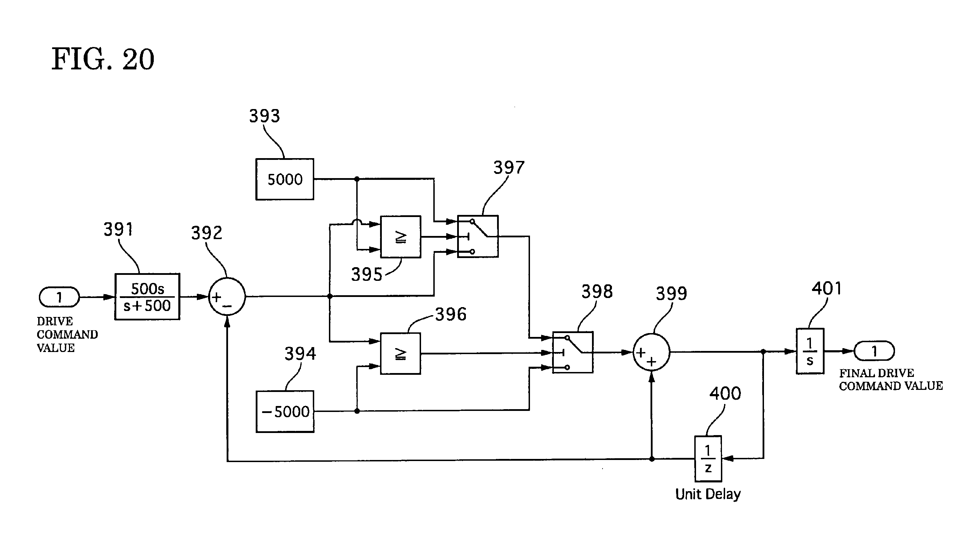

FIG 20 is a block diagram of the rate limiter part 39.
The rate limiter part 39 includes computing parts 391, 400 and 401, adder 392 and 399, memory parts 393 and 34, comparators 395 and 396 and switches 397 and 398.
The computing part 391 computes the change speed of the dive command values by using a transfer function 500s / (s + 500).
The adder 392 computes a variation of the change speed in the drive command value by subtracting an output of the computing part 400 from an output of the computing part 391.
The memory part 393 stores a maximum value of 5000 in the predetermined range and outputs it.
The memory part 394 stores a minimum value of -5000 in the predetermined range and outputs it.

The comparing part 395 compares an output of the adder 392 and the maximum value of the predetermined range with each other and outputs a comparison result.
The comparing part 396 compares an output of the adder 392 and the minimum value of the predetermined range with each other and outputs a comparison result.
The switch 397 directly outputs the output (the variation) of the adder 392 when it does not exceed the predetermined range, while the switch 397 outputs 5000 of the maximum value when it exceeds the predetermined range.

The switch 398 directly outputs the output of the switch 397 when the output of the adder 392 does not exceed the predetermined range, while the switch 398 outputs -5000 of the minimum value when it exceeds the predetermined value in a minus direction.
The adder 399 adds the output of the switch 398 and the change speed of the previous adjacent computation, namely the output of the computing part 400.
The computing part 400 outputs the change speed of the previous adjacent as a result of a computation of a delay.
The computing part 401 carries out an integral computation by using a transfer function 1/s to convert the change speed of the drive command value into the drive command value as a final output. The other construction of the third embodiment is similar to that of the first embodiment, and its description is omitted.

The operation of the select assist device of the automatic transmission of the third embodiment will be described.

### <Assist Control Process>

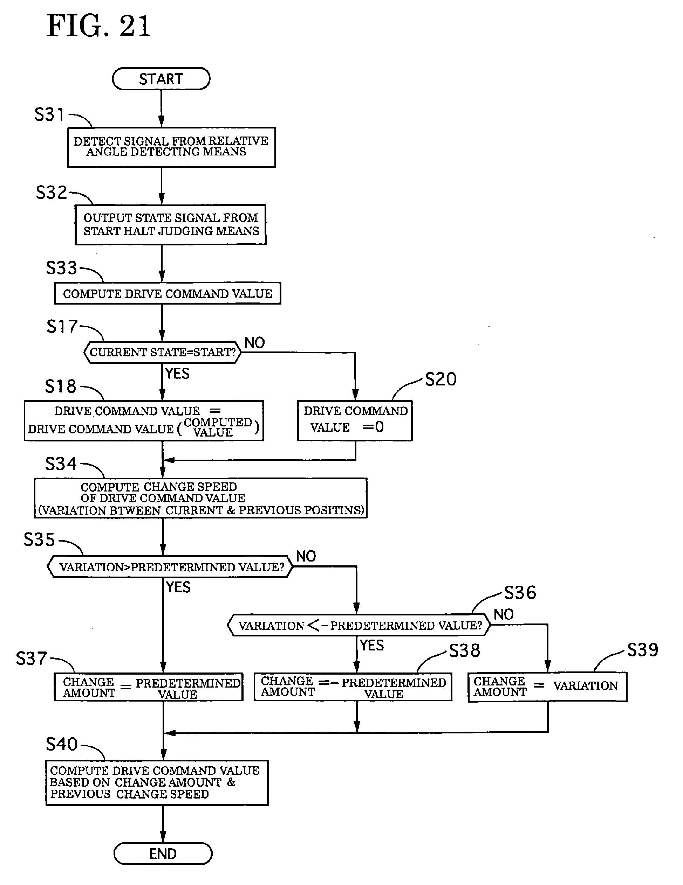

FIG. 21 is a flow chart showing a flow of an assist control process executed by a control unit of the automatic transmission of the third embodiment, and hereinafter each step thereof will be described. Incidentally, the same reference number is assigned to a step that carries out the process similar to that in the flow chart of the first embodiment shown in FIG 10, and its description is omitted.

At a step S31, the control unit is inputted with the relative displacement amount detected by the position sensor 6, and then the flow goes to the step S32.

At the step S32, a start hat judging part 31 judges a start or a halt, and then the flow goes to a step S33.

At the step S33, it computes the drive command value so that the relative amount approximates zero, and then the flow goes to a step S17. Incidentally, it outputs zero at the halt.

At the step S34, it computes the variation of the change speeds of the drive command value between the current vale and the previous value thereof, and then the flow goes to a step S35.

At the step S35, it judges whether or not the variation exceeds the maximum value in a plus direction. If the variation exceeds, the flow goes to a step S37, while if the variation des not exceed, the flow goes to a step S36.

At the step S36, it judges whether or not the variation exceeds the minimum in the minus direction. If the variation exceeds, the flow goes to a step S38, while if the variation does not exceed, the flow goes to a step S39.

At the step S37, the change speed amount is set to be the maximum value.

At the step S38, the change speed amount is set to be the minimum value.

At the step S39, the change speed amount is set to be the variation.

At a step S40, it computes the drive command value based on the variation of the change speed amount and the previous value thereof.

### <Vibration Suppressing Operation>

In the third embodiment, when the start is judged, the drive command value computing part 38 computes the drive command value by executing a process at the step S33 so that the relative displacement amount approximates zero.
Then the computed drive command value is inputted to the rate limiter part 39.
In the rate limiter part 39, the computing part 391 computes the change speed based on the inputted drive command values by executing the process of the steps S34 to S40, and then it computes the variation of the current and previous change speeds. The memory parts 393 and 394, the comparators 395 and 396 and the switches 397 and 398 limits the variation so that if the variation is within the predetermined range, it directly outputs the variation, while the variation is out of the predetermined range, it outputs the maximum value in the plus direction or the minimum value in the minus direction.

After then, the adder 399 adds the variation to the previous variation, and the computing part 401 integrates its result to output the integral value as the drive command value.
This suppresses the outputted drive command value to be within the predetermined range.

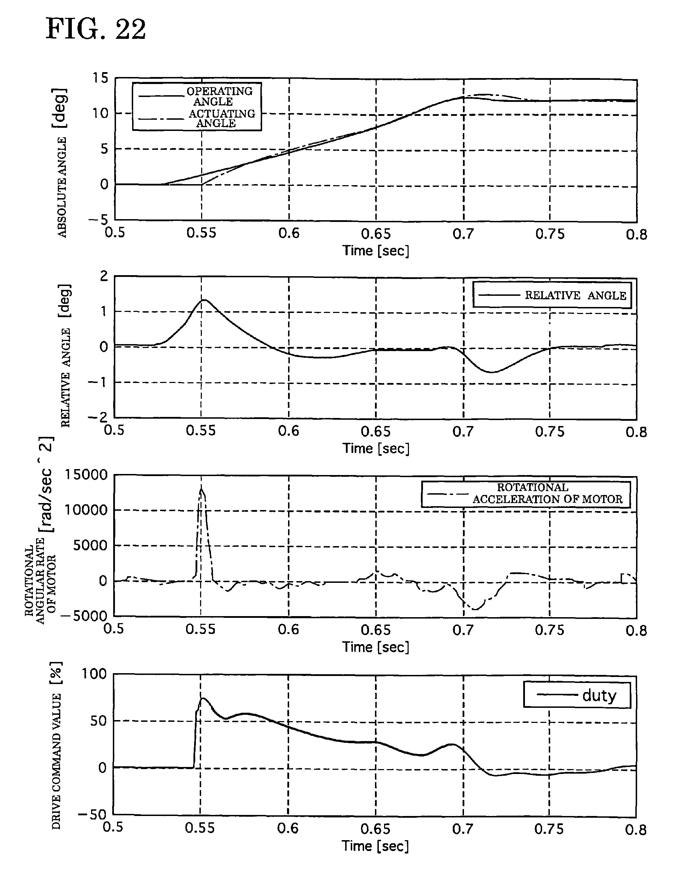

FIG. 22 is a time chart showing a test result, when there is not provided the rate limiter part in the select assist device of the automatic transmission, of the positions, a displacement amount, a rotational angular rate of the motor and the drive command value.

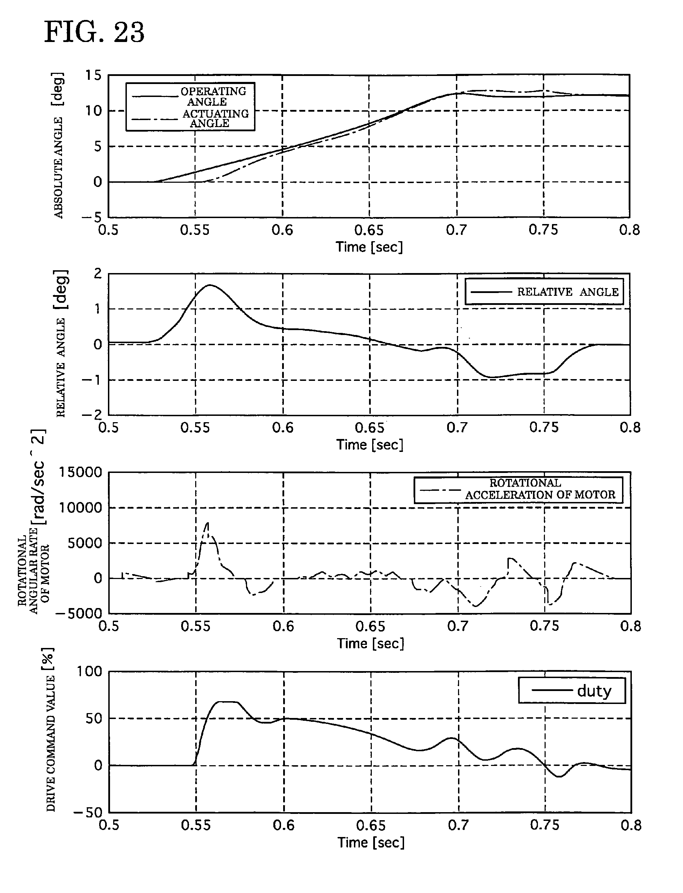

FIG. 23 is a time chart showing a test result, of the select assist device of the automatic transmission of the third embodiment, of the positions, a displacement amount, a rotational angular rate of the motor and the drive command value.

At the start in a case where the relative displacement amount is controlled to approximate to zero without the rate limiter part 39, the drive command value suddenly rises as shown in FIG. 22, thereby the rotational angular rate of the motor suddenly becomes to be large at the start.
In the third embodiment, the change of the drive command values is suppressed as shown in FIG. 23, which also suppresses the sudden rise of the drive command value, consequently a moderate rise thereof being obtained. Therefore, the assist actuator is modestly driven, thereby the vibrations being remarkably decreased.

The effect of the select assist device of the automatic transmission of the third embodiment will be described.
The select assist device of the automatic transmission of the third embodiment has the following effects.
(4) The control unit 3 includes the start halt judging part 31 for judging the start or the halt by comparing the relative displacement amount and the start threshold value, the drive command value setting part 38 for computing the drive command value to decrease the relative displacement amount and setting the drive command value to be substantially zero when the judgment result is the halt while setting an drive command output as the drive command value, and the rate limiter part 39 for setting the change speed of the drive command output to be within the predetermined range. The rate limiter part 39 suppresses the sudden change of the drive command value, which decreases the vibrations transmitting to a hand of a driver, thereby providing a comfortable operation feeling.

### <The Other Modes>

While the best modes of the present invention have been described above based on the first to third embodiments, a concrete construction of the present invention is not limited to the embodiments, modifications and design changes of the invention are contained in the present invention as long as they do not depart from the subject matter of the present invention.
A configuration and dimensions of the select lever 11 may be set appropriately, and it may be one with a switch-like shape which a driver can operate by his or her finger. As of the position sensor, it may be a potentiometer in which a brush and a substrate are variably moved relative to each other for example.

Further, the relative displacement amount detecting means may employ a position sensor 61 (corresponding to the operating position detecting means) provided on the supporting pivot 19 for detecting a stroke angle of the first swingable part 13 relative to the fixed member, namely the operating angle of the select lever 11, and the position sensor (corresponding to the actuating position detecting means) provided on the supporting pivot 19 for detecting the stroke angle of the second swingable part 17 relative to the fixed member, namely a rotational position of the control arm 51 of the automatic transmission 5 through the control cables 4. Computing the variation between the operating position detected by the position sensor 6 and the actuating position detected by the position sensor 62, the relative displacement amount is obtained. According to a combination of the position sensors, both of the relative displacement amount and the operating position can be obtained directly or by the computation.

While the playably connecting mechanism is used in the first to third embodiments as a relative displacement allowably connecting mechanism, which is not limited to the playably connecting mechanism, and it may be an elastically connecting mechanism that is capable of connecting both members allowing an elastic displacement within its elastic limit displacement for example.
Concretely explaining the elastically connecting mechanism, in the first embodiment, there are provided two springs which are located between the projection 171 and the one side wall of a play hole 131 and between the projection 171 and the other side wall thereof, respectively, so as to urge the projection 171 toward the midpoint from both side, where the projection 171 is located into the play hole 131 of the first swingable part 13 to be engaged therewith. The check mechanism 14 is removed. Then, the positions of the first swingable part 13 and the select lever 11 are determined due to elastic force by the springs being extended and contracted according to a movement of the projection 171 of the second swingable part 17 which is rotatably positioned at the actuating position by the detent force of the automatic transmission 5 through the control cables 4. In the elastically connecting mechanism, the detent force caused in the automatic transmission side is transmitted through the springs, which generates an operational reaction force acting on the select lever 11. In addition, the control unit controls so that the projection 171 approximates to the midpoint of the play hole, that is, so that the elastic displacement becomes zero. Therefore, the actuation of the automatic transmission 5 follows the operation of the select lever 11. The elastically connecting mechanism is also the example of the relative displacement allowably connecting mechanism.

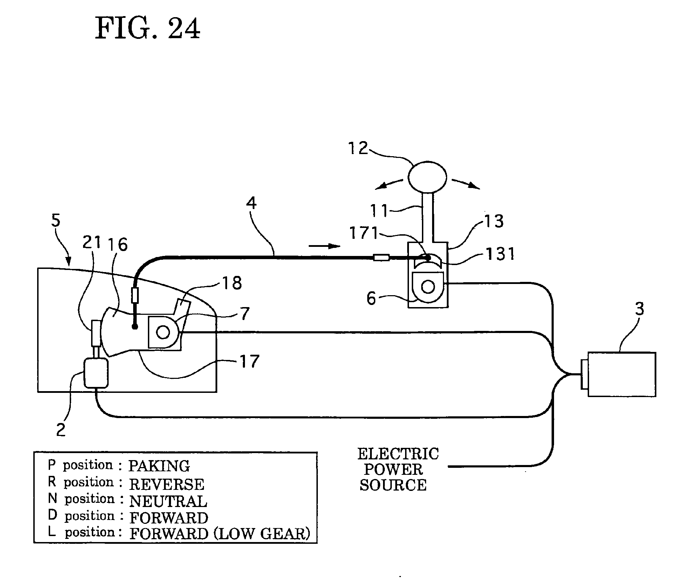

While the play hole and the projection for allowing the play amount, and the assist actuator are provided in the select part as the example of the playably connecting mechanism in the first to third embodiments, the second swingable part 17 and the assist actuator may be provided in the automatic transmission 5 as shown in FIG. 24. Concretely explaining with reference to the drawing of FIG. 14, it is constructed in such a way that the control arm 51 of the automatic transmission is connected with the second swingable part 17, so that the control arm 51 shifts the select positions by a rotation of the second swingable part 17. The second swingable part 17 is provided with the wheel 16, which is engaged with the worm 21 of the assist actuator 2. Accordingly, the assist actuator 2 is installed at the automatic transmission side. The control cables 4 is connected at its one end portion with the projection 171 movable in the play hole 131 of the first swingable part 13 provided with the select lever 11, and it is also connected at the other end portion with the second swingable part 17. Such a construction may be employed.

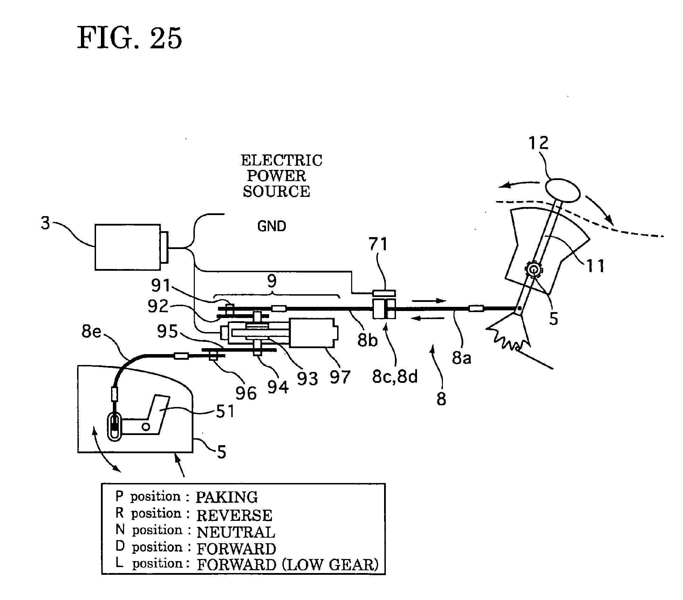

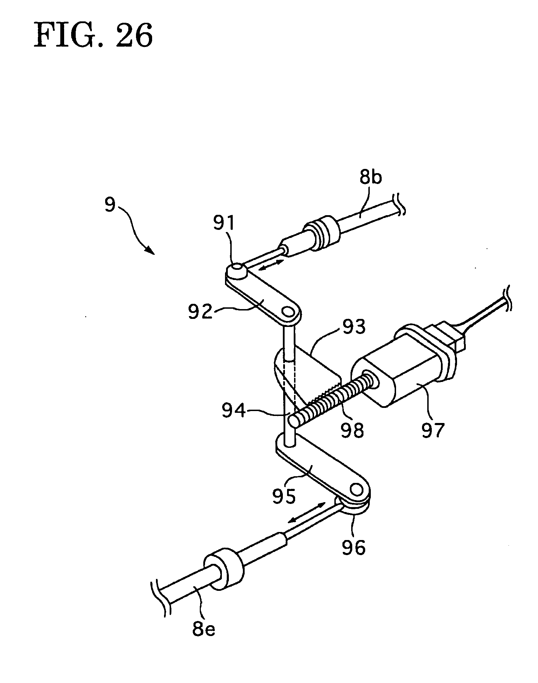

Further, as examples of the playably connecting mechanism, there are shown the examples in which a playably connecting mechanism and the assist actuator are provided between the control cables as shown in FIG. 25 and FIG. 26. In these examples, the playably connecting mechanism is a connection of the control cable 8a and the control cable 8b, and its displacement amount is detected by a position sensor 71. The control cable 8b, which is at the select lever 11 side, is connected with an input lever 92 through a joint 91, and a control cable 8e is connected with an output lever 95 through a joint 96. The input lever 92 and the output lever 95 are co-axially connected with an output shaft 94. The output shaft 94 is provided wit a wheel 93, which is engaged with the worm 98 provided on an output shaft of an electric motor 96 of the assist actuator. Thus, the playably connecting mechanism may employ a construction in which the playably connecting mechanism and the assist actuator are provided between the control cables, and the displacement amount may be directly detected at a portion/a part where the relative displacement amount in the playably connecting mechanism generates.

In order to obtain the comfortable feeling due to suppressing the vibrations as described in the first to third embodiments, the problem is solved to obtain further comfortable operation feeling, in addition to a sufficient ensuring of a function for the relative displacement amount to follow the midpoint, or a function for the actuating position to follow the operating position. The present invention satisfies basic functions, which are understood from the drawings of FIG. 14, FIG. 23 and others. Therefore, the select assist devices of the automatic transmissions of the first to third embodiments do not only suppress the vibrations at the start, but also provide the comfortable feeling by solving the problem in the vibrations at the start, satisfying its following function.

### [INDUSTRIAL APPLICABILITY]

The select assist device of the present invention of the present invention can be applied to a select assist device of an automatic transmission, with a double clutches instead of a conventional torque converter provided on an automatic transmission, and others.

## Claims

1. A select assist device for an automatic transmission in which a select lever and a select position shift device of an automatic transmission are connected with each other by a select force transmitting system that is provided with an assist actuator controlled by an assist control means to assist a select operating force of a driver, the select assist device is
**characterized in that**
the assist control means has an assist suppressing means for suppressing a sudden assist which is produced immediately after the assist actuator is started.

2. The select assist device for the automatic transmission according to claim 1, wherein
the select force transmitting system comprises: a first connecting member connected with the select lever; a second connecting member connected with the select position shift device and the assist actuator; and a relative displacement allowably connecting mechanism which is capable of connecting the first connecting member and the second connecting member with each other, allowing a relative displacement amount between the first connecting member and the second connecting member within a limit amount, wherein
the select assist device further comprises a relative displacement amount detecting means for detecting the relative displacement, and wherein
the assist control means comprises:
a start halt judging means for judging a start halt by comparing the relative displacement amount and a start threshold value; a target relative displacement amount setting means for setting a target relative displacement amount so that the target relative displacement amount is set to be a predetermined value when the assist actuator starts and then is gradually decreased; and a drive command value computing means for computing a drive command value so as to approximate the relative displacement amount to the target relative displacement amount.

3. The select assist device for the automatic transmission according to claim 1, wherein
the select force transmitting system comprises: a first connecting member connected with the select lever; a second connecting member connected with the select position shift device and the assist actuator; and a relative displacement allowably connecting mechanism which is capable of connecting the first connecting member and the second connecting member with each other, allowing a relative displacement amount between the first connecting member and the second connecting member within a limit amount, wherein
the select assist device further comprises: an operating position detecting means for detecting an operating position of the select lever; an actuating position detecting means for detecting an actuating position of the select position shift device; and an assist control means for controlling the assist actuator so that the actuating position follows the operating position, and wherein
the assist control means comprises:
a start halt judging means for judging a start halt based on a difference between the operating position value and the actuating position value; a target actuating position value setting means for setting a target actuating position value so that the target actuating position value is set to be a predetermined value smaller than an operating position value when the assist actuator starts and then is gradually increased toward the operating position value; and a drive command value computing means for computing a drive command value so as to approximate the actuating position value to the target actuating position value.

4. The select assist device for the automatic transmission according to claim 1, wherein
the select force transmitting system comprises: a first connecting member connected with the select lever; a second connecting member connected with the select position shift device and the assist actuator; and a relative displacement allowably connecting mechanism which is capable of connecting the first connecting member and the second connecting member with each other, allowing a relative displacement amount between the first connecting member and the second connecting member within a limit amount, wherein
the select assist device further comprises a relative displacement amount detecting means for detecting the relative displacement, and wherein
the assist control means comprises:
a start halt judging means for judging a start halt by comparing the relative displacement amount and a start threshold value; a drive command value computing means for computing a drive command value so as to decrease the relative displacement amount; a drive command value shifting means for computing a drive command value so that the drive command value is set to be substantially zero when a judgment result of the start halt is a halt and the drive command value is set to be a drive command output; and a rate limiter means for setting a change rate of the drive command output to be within a predetermined range.
